# EUROPÄISCHE PATENTSCHRIFT

(11) **EP 1 810 896 B1**
(45) Veröffentlichungstag und Bekanntmachung des Hinweises auf die Patenterteilung: **12.11.2014**
(21) Anmeldenummer: 07000497.3
(22) Anmeldetag: 11.01.2007
(51) Int. Cl.: B60S 1/08

(54) **Baugruppe mit einem Regensensor und einer Halteklammer für den Regensensor.**
Assembly group with a rain sensor and a holding clip for the rain sensor.
Module avec un capteur de pluie et une agrafe de fixation pour le capteur de pluie.

(30) Priorität: 19.01.2006 DE 202006000853 U; 28.08.2006 DE 102006040213
(43) Veröffentlichungstag der Anmeldung: 25.07.2007
(60) Teilanmeldung: 13194255.9
(73) Patentinhaber: TRW Automotive Electronics & Components GmbH, 78315 Radolfzell (DE)
(72) Erfinder: Mordau, Ulf, 78652 Deisslingen (DE); Neumann, Andreas, 78343 Gaienhofen-Horn (DE)
(74) Vertreter: Prinz & Partner mbB

(56) Entgegenhaltungen:
- EP-A1- 1 491 404
- EP-A2- 1 486 388
- DE-B3-102004 032 749
- FR-A1- 2 839 016

## Beschreibung

Die Erfindung betrifft eine Baugruppe mit einem Regensensor und einer Halteklammer für den Regensensor.

Aus der EP 1 202 885 ist ein Regensensor bekannt, der mittels zweier Federbügel an einem Halterahmen angebracht werden kann. Diese Art der Anbringung des Sensors erfordert ein vergleichsweise aufwendig gestaltetes Gehäuse des Sensors, damit die Federbügel angesetzt werden können, und erfordert vergleichsweise aufwendig hergestellte Federbügel, die mit gekrümmten und daher nicht leicht herzustellenden Abschnitten versehen sind. Außerdem ist die Endmontage vergleichsweise schwierig, da die beiden Federbügel verrastet werden müssen, während der Sensor im Halterahmen gehalten werden muß.

Auch aus der DE 10 2004 032 749 A1 und der EP 1 491 404 A1 sind Befestigungsvorrichtungen bekannt, bei denen der Regensensor erst an einem Rahmen montiert wird und anschließend mit einer Halteklammer an diesem fixiert wird. Vor allem, wenn der Rahmen schon im Fahrzeug montiert ist, also über kopf an der Windschutzscheibe befestigt ist, kann der Regensensor aber bei der Montage der Halteklammer aus dem Rahmen herausfallen.

Aus der EP 1 486 388 A2 ist eine Baugruppe nach dem Oberbegriff des Anspruchs 1 bekannt.

Die Aufgabe der Erfindung besteht darin, eine Baugruppe mit Sensor und Halteklammer zu schaffen, die sich durch geringe Herstellungskosten sowie eine zuverlässige Montage auszeichnet.

Zur Lösung dieser Aufgabe ist erfindungsgemäß eine Baugruppe mit den Merkmalen des Anspruchs 1 vorgesehen. Die Erfindung beruht auf dem Grundgedanken, zur Befestigung des Sensors nur ein einziges Bauteil zu verwenden, nämlich die Halteklammer. Diese umgreift großflächig den Sensor auf der vom Halterahmen abgewandten Seite und kann mit einer flüssigen Bewegung, insbesondere mit einer Bewegung in einer einzigen Richtung, am Halterahmen verrastet werden. Durch die Merkmale des Anspruchs 1 ist die Montage der Halteklammer mit dem daran vormontierten Regensensor wesentlich vereinfacht.

Vorteilhafte Ausgestaltungen der Erfindung ergeben sich aus den Unteransprüchen.

Die Erfindung wird nachfolgend anhand einer Ausführungsform beschrieben, die in den beigefügten Zeichnungen dargestellt ist. In diesen zeigen:
- Figur 1 eine perspektivische Ansicht des mittels einer Halteklammer gemäß einer ersten Ausführungsform am Halterahmen montierten Sensors;
- Figur 2 eine zweite perspektivische Ansicht des mittels der Halteklammer gemäß der ersten Ausführungsform montierten Sensors;
- Figur 3 eine Draufsicht auf ein Stanzteil, welches zur Halteklammer gemäß der ersten Ausführungsform gebogen werden kann;
- Figur 4 eine perspektivische Ansicht der gebogenen Halteklammer gemäß der ersten Ausführungsform;
- Figur 5 eine weitere perspektivische Ansicht der gebogenen Halteklammer gemäß der ersten Ausführungsform;
- Figur 6 eine perspektivische Ansicht der am Sensor vormontierten Halteklammer gemäß der ersten Ausführungsform;
- Figur 7 in vergrößertem Maßstab einen Ausschnitt von Figur 6;
- Figur 8 einen ersten Schritt der Montage des Sensors am Halterahmen mittels einer Halteklammer gemäß der ersten Ausführungsform;
- Figur 9 in vergrößertem Maßstab einen teilgeschnittenen Ausschnitt von Figur 8;
- Figur 10 einen zweiten Schritt bei der Montage des Sensors mittels der Halteklammer gemäß der ersten Ausführungsform;
- Figur 11 in vergrößertem Maßstab einen Ausschnitt aus Figur 10;
- Figur 12 in einer Ansicht entsprechend derjenigen von Figur 11 einen dritten Schritt bei der Montage;
- Figur 13 in vergrößertem Maßstab eine Rastlasche der Halteklammer gemäß der ersten Ausführungsform im Zustand von Figur 10;
- Figur 14 in einer Ansicht entsprechend derjenigen von Figur 13 einen Zwischenzustand; und
- Figur 15 in vergrößertem Maßstab den Rastarm im Zustand von Figur 12.

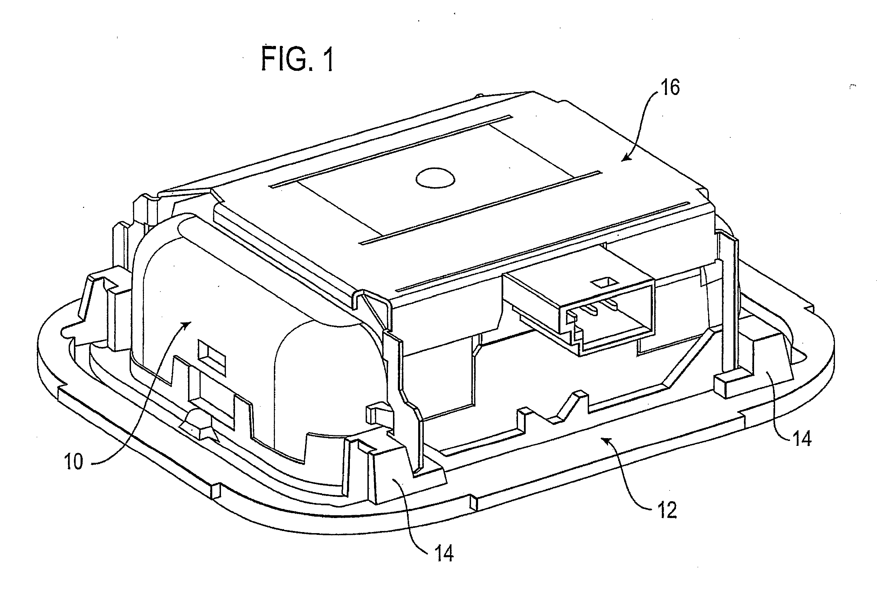

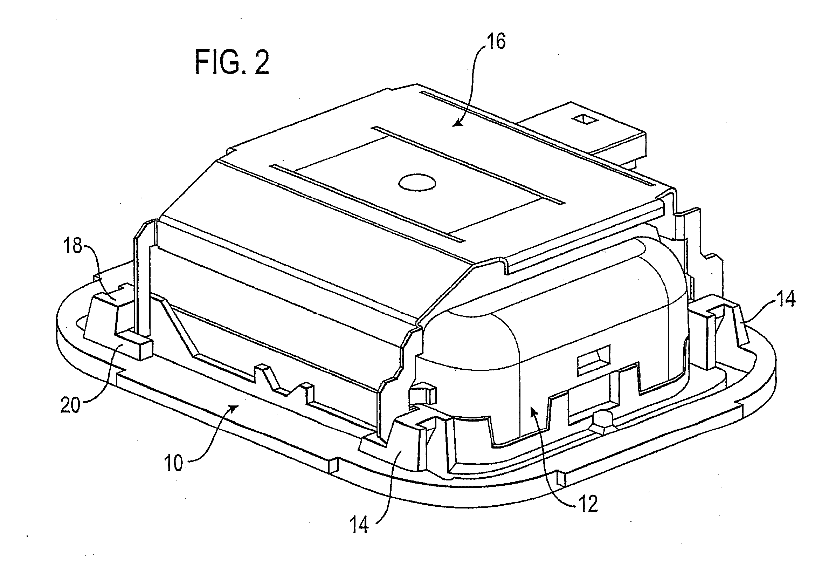

In den Figuren 1 und 2 ist ein Sensor 10 gezeigt, der insbesondere ein Regensensor sein kann, der an einer Windschutzscheibe eines Kraftfahrzeugs angebracht wird. Der Sensor 10 ist in einen Halterahmen 12 eingesetzt, der mit der Windschutzscheibe verklebt sein kann. Der Halterahmen 12 weist insgesamt vier Widerlager 14 auf, die dazu dienen, eine Halteklammer 16 gemäß einer ersten Ausführungsform fest mit dem Halterahmen 12 zu verrasten. Jedes Widerlager 14 besteht aus einem Bügel 18 sowie einem Fixiersteg 20.

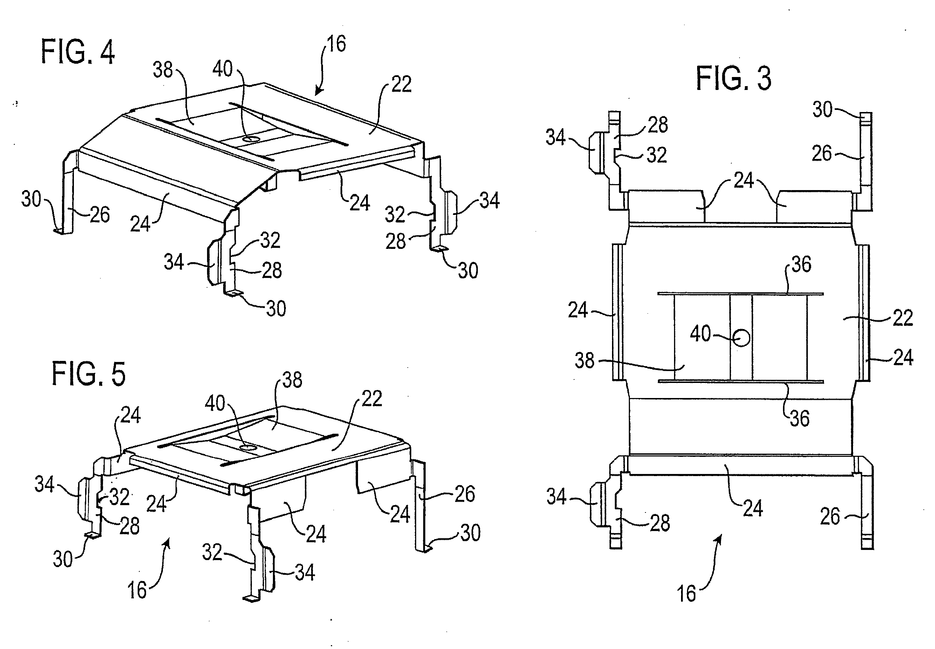

Die Halteklammer 16 (siehe insbesondere die Figuren 3 bis 5) ist ein einstückiges, gestanztes Blechbiegeteil, das eine Platte 22, an jeder Seite der Platte einen abgebogenen Rand 24, zwei Haltearme 26 und zwei Rastarme 28 aufweist.

Die beiden Haltearme 26 weisen ebenso wie die beiden Rastarme 28 an ihrem freien, von der Platte 22 abgewandten Ende einen abgebogenen Fuß 30 auf. Die Haltearme 26 sind mit einer geraden Außenkontur ausgeführt, während die Rastarme 28 auf ihrer Innenseite jeweils eine Aussparung 32 aufweisen. Außenseitig ist jeweils ein Flügel 34 vorgesehen. Der Flügel 34 dient zum einen dazu, den Rastarm 28 so zu stabilisieren, daß trotz der Aussparung 32 die notwendige Festigkeit gewährleistet ist. Zum anderen ermöglicht er, bei der später erläuterten Vormontage den entsprechenden Rastarm hinter eine Rastnase zu ziehen.

In die Platte 22 sind zwei parallele, schlitzartige Einschnitte 36 gestanzt, so daß zwischen ihnen eine Federlasche 38 definiert ist. Die Federlasche 38 ist aus der Ebene der Platte nach unten herausgebogen (siehe insbesondere die Figuren 4 und 5), also auf die Seite, auf der sich auch die Haltearme 26 und die Rastarme 28 befinden. Mittig ist die Federlasche 38 mit einer Öffnung 40 versehen.

In einem ersten Schritt der Montage wird die Halteklammer 16 am Sensor 10 vormontiert. Dabei wird die Platte 22 auf die Rückseite des Sensors aufgesetzt, so daß sich die Haltearme und die Rastarme seitlich etwa in der Nähe der Ecken des Gehäuses des Sensors 10 entlang dem Gehäuse erstrecken. Die abgebogenen Ränder 24 dienen dabei zur Fixierung. Die Positionierung wird weiterhin durch eine Aussparung an einem Rand 24 verbessert, in die ein Steckverbinder 43 des Sensors 10 eingesetzt ist. Außerdem ist das Gehäuse des Sensors 10 mit einem Fixiervorsprung 42 versehen, der in die Öffnung 40 in der Federlasche 38 eingreift.

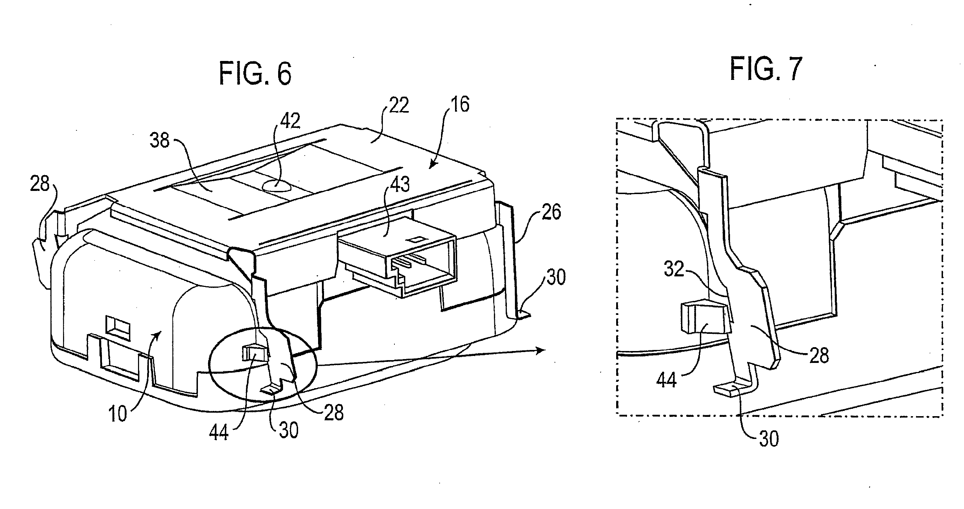

Am Gehäuse des Sensors 10 sind zwei Rastnasen 44 vorgesehen, die mit den beiden Rastarmen 28 zusammenwirken können. In dem in den Figuren 6 und 7 gezeigten, vormontierten Zustand halten die Rastnasen 44 die Rastarme 28 in einem elastisch ausgelenkten Zustand. Genauer gesagt werden die Rastarme 28 in einem Zustand gehalten, in dem ihre Füße 30 zu den Haltearmen 26 hingebogen sind, so daß der Abstand zwischen den Füßen eines Rastarms 28 und eines Haltearms 26 auf einer Seite des Gehäuses des Sensors verringert ist. Es ist in Figur 7 zu sehen, daß die Rastnase 44 dabei knapp unterhalb der Aussparung 32 am Rastarm 28 angreift.

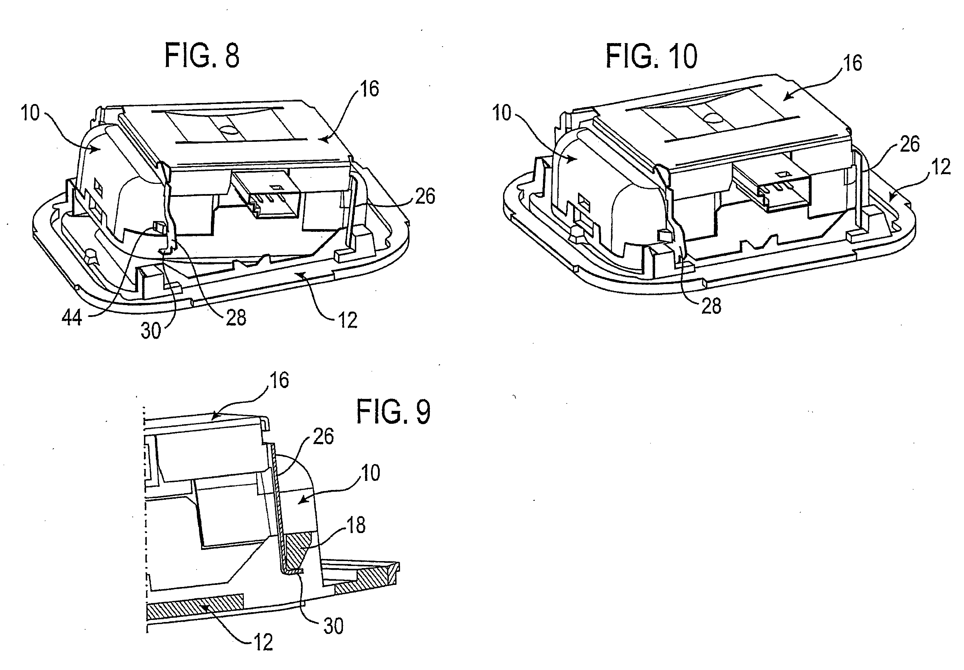

In diesem vormontierten Zustand werden der Sensor 10 und die Halteklammer 16 in den Rahmen 12 so eingesetzt, daß die Füße 30 der Haltearme 26 in die Bügel 18 an einer Seite des Halterahmens 12 eingreifen (siehe die Figuren 8 und 9). Die Fixierstege 20 dienen dabei zur Vorfixierung und verhindern, daß die Haltearme 26 seitlich verrutschen. Da die Rastnasen 44 die Rastarme 28 in einem elastisch ausgelenkten Zustand halten, können die Füße 30 der Rastarme 28 an dem ihnen zugeordneten Bügel vorbeibewegt werden, so daß der Sensor 10 mit der Halteklammer 16 aus der in Figur 8 gezeigten Stellung vollständig nach unten in die in Figur 10 gezeigte Stellung verschwenkt werden kann.

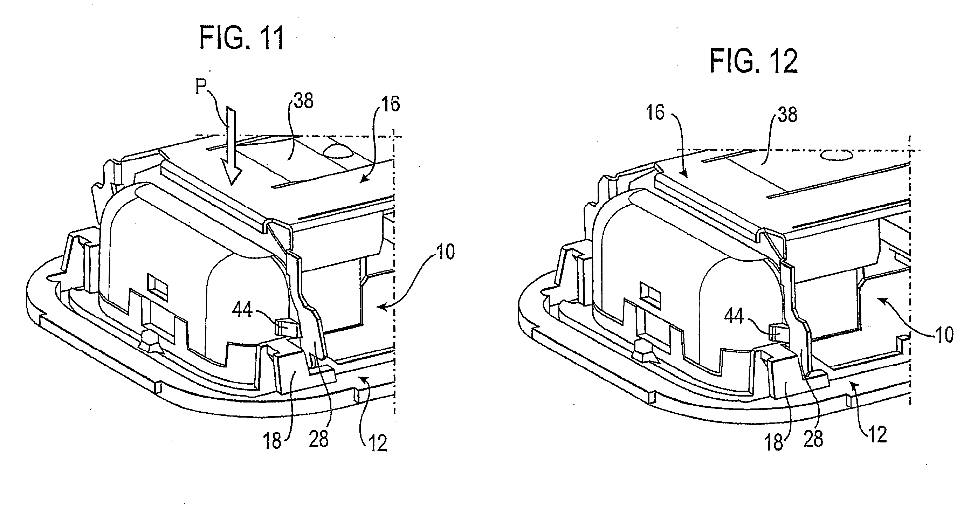

Wenn anschließend in der Richtung des Pfeils P auf die Seite der Platte 22 der Halteklammer 16 gedrückt wird, auf der sich die Rastarme 28 befinden, wird die Platte 22, entgegen der elastischen Andruckkraft der Federlasche 38, näher an den Sensor 10 gedrückt. Dabei verschieben sich die Rastarme 28 relativ zu den Rastnasen 44, so daß die Aussparungen 32 in den Bereich der Rastnasen 44 gelangen. Dadurch werden die Rastarme 28 freigegeben, so daß sie in ihre Ausgangsstellung schnappen (siehe Figur 12), in der ihre Füße 30 innerhalb der Bügel 18 am Halterahmen 12 liegen. Der Sensor 10 ist nun ordnungsgemäß am Halterahmen 12 angebracht, wobei er elastisch in seine korrekte Lage beaufschlagt ist. Dies ist gut erkennbar durch Vergleich der Federlasche in den Figuren 11 und 12; in Figur 12 ist die Federlasche aus ihrer in Figur 11 gezeigten Ausgangsstellung elastisch ausgelenkt, so daß sie den Sensor in den Halterahmen 12 drückt.

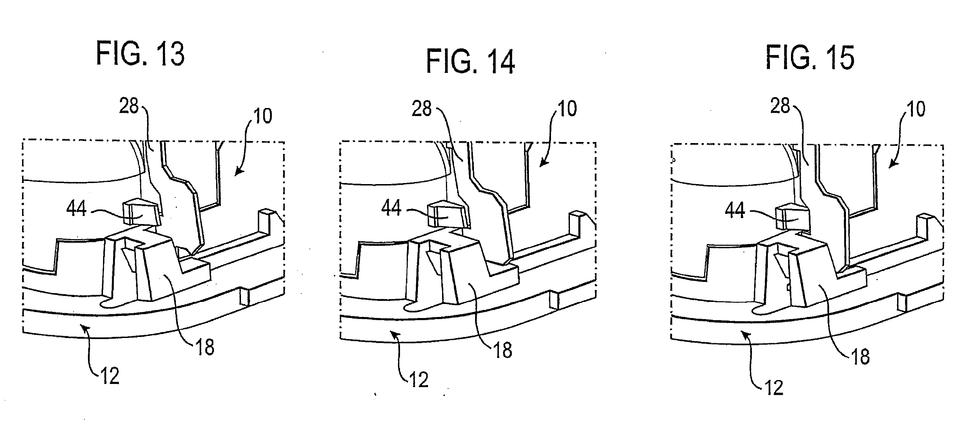

Die Relativbewegung zwischen den Rastarmen 28 und den Rastnasen 44 am Gehäuse des Sensors 10 ist zur Verdeutlichung nochmals in den Figuren 13 bis 15 gezeigt. In Figur 13 ist der vormontierte Zustand gezeigt, in welchem die Rastnase 44 den Rastarm 28 ausgelenkt hält. In Figur 14 ist der Rastarm 28 in dem Zustand gezeigt, in welchem er gerade so weit nach unten relativ zur Rastnase 44 verstellt ist, daß die Rastnase in die Aussparung 32 eintauchen kann. In Figur 15 ist dann der Zustand gezeigt, in welchem der Rastarm 28 in seine Ausgangsstellung zurückgeschnappt ist.

Ein besonderer Vorteil der erfindungsgemäßen Halteklammer und der erfindungsgemäßen Baugruppe besteht darin, daß der Sensor zusammen mit der vormontierten Halteklammer an das Fahrzeug geliefert werden kann, in welchem bereits der Halterahmen verbaut ist. Der Sensor kann dann zusammen mit dem Halterahmen, der sich in einem präzise definierten Zustand befindet, mittels einer einfachen Handbewegung in den Halterahmen eingesetzt und an diesen eingedrückt werden, wodurch die Halteklammer automatisch verrastet. Das Zurückschnappen der Rastarme gibt auch eine akustische Rückmeldung dahingehend, daß die Verrastung ordnungsgemäß erfolgt ist.

## Patentansprüche

1. Baugruppe mit einem Regensensor (10) und einer Halteklammer (16) für den Regensensor (10), wobei die Halteklammer eine Platte (22) aufweist, die den Sensor abdecken kann, sowie mindestens einen Haltearm (26) und mindestens einen Rastarm (28), die so ausgebildet sind, daß sie an einem Halterahmen (12) für den Sensor angreifen können, wobei die Halteklammer (16) einstückig ausgebildet ist und der Regensensor (19) an der Halteklammer (16) vormontiert ist, **dadurch gekennzeichnet, daß** der Regensensor (10) einen Fixiervorsprung (42) und eine Rastnase (44) aufweist, die mit einer Aussparung (32) im Rastarm (28) der Halteklammer (16) so zusammenwirkt, daß sie den Rastarm (28) in einem vormontierten Zustand halten kann, in welchem der Rastarm (28) in ein Widerlager (14) am Halterahmen (12) eingesetzt werden kann, und den Rastarm (28), nachdem der Sensor (10) am Halterahmen montiert ist, in einer Raststellung arretieren kann.

2. Baugruppe nach Anspruch 1, **dadurch gekennzeichnet, daß** die Halteklammer (16) ein Blechbiegeteil ist.

3. Baugruppe nach einem der vorhergehenden Ansprüche, **dadurch gekennzeichnet, daß** in der Platte (22) mindestens eine Federlasche (38) vorgesehen ist, die aus der Ebene der Platte in Richtung zum Sensor hin herausgebogen ist.

4. Baugruppe nach Anspruch 3, **dadurch gekennzeichnet, daß** die Federlasche (38) durch zwei parallele Einschnitte (36) in der Platte (22) der Halteklammer (16) definiert ist.

5. Baugruppe nach Anspruch 3 oder Anspruch 4, **dadurch gekennzeichnet, daß** in der Federlasche (38) eine Öffnung (40) für einen Fixiervorsprung (42) des Sensors (10) vorgesehen ist.

6. Baugruppe nach einem der vorhergehenden Ansprüche, **dadurch gekennzeichnet, daß** die Platte (22) mit einem abgebogenen Rand (24) versehen ist, der zur Fixierung des Sensors dient.

7. Baugruppe nach Anspruch 6, **dadurch gekennzeichnet, daß** der Haltearm (26) bzw. der Rastarm (28) am abgebogenen Rand (24) der Platte (22) vorgesehen sind.

8. Baugruppe nach Anspruch 6 oder Anspruch 7, **dadurch gekennzeichnet, daß** der abgebogene Rand (24) mit einer Aussparung für einen Steckverbinder (43) des Sensors versehen ist.

9. Baugruppe nach einem der Ansprüche 1 bis 6, **dadurch gekennzeichnet, daß** die Platte (22) mit einer Montagehilfe (50) versehen ist, mittels der die Halteklammer (16) mit dem Sensor (10) verbunden werden kann.

10. Baugruppe nach Anspruch 9, **dadurch gekennzeichnet, daß** die Montagehilfe nach Art einer seitlichen Lasche (50) ausgebildet ist.

11. Baugruppe nach Anspruch 9 oder Anspruch 10, **dadurch gekennzeichnet, daß** die Montagehilfe eine Führungskulisse (52) aufweist, in die ein Führungsvorsprung (54) des Sensors (10) eingreifen kann.

12. Baugruppe nach einem der vorhergehenden Ansprüche, **dadurch gekennzeichnet, daß** an einer Seite der Platte zwei Haltearme (26) und an der anderen Seite zwei Rastarme (28) vorgesehen sind.

13. Baugruppe nach einem der Ansprüche 1 bis 11, **dadurch gekennzeichnet, daß** die beiden Rastarme (28) mittels eines gemeinsamen Verbindungssteges (29) mit der Platte (22) verbunden sind.

14. Baugruppe nach einem der vorhergehenden Ansprüche, **dadurch gekennzeichnet**, das die Baugruppe einen Halterahmen (12) aufweist, der auf einer Scheibe eines Kraftfahrzeugs angebracht werden kann.

## Claims

1. An assembly comprising a rain sensor (10) and a holding clip (16) for the rain sensor (10), the holding clip including a plate (22) which can cover the sensor, and at least one holding arm (26) and at least one detent arm (28) which are configured such that they can engage a holding frame (12) for the sensor, the holding clip (16) being formed in one piece, and the rain sensor (19) being preassembled on the holding clip (16), **characterized in that** the rain sensor (10) includes a fixing projection (42) and a detent nose (44) which cooperates with a recess (32) in the detent arm (28) of the holding clip (16) such that it can hold the detent arm (28) in a preassembled condition in which the detent arm (28) can be inserted into an abutment (14) on the holding frame (12), and can lock the detent arm (28) in a detent position after the sensor (10) is mounted to the holding frame.

2. The assembly according to claim 1, **characterized in that** the holding clip (16) is a bent sheet metal part.

3. The assembly according to either of the preceding claims, **characterized in that** the plate (22) has at least one spring tongue (38) provided therein, which is bent out from the plane of the plate towards the sensor.

4. The assembly according to claim 3, **characterized in that** the spring tongue (38) is defined by two parallel incisions (36) in the plate (22) of the holding clip (16).

5. The assembly according to claim 3 or claim 4, **characterized in that** an opening (40) for a fixing projection (42) of the sensor (10) is provided in the spring tongue (38).

6. The assembly according to any of the preceding claims, **characterized in that** the plate (22) is provided with a bent edge (24) which serves to fix the sensor in place.

7. The assembly according to claim 6, **characterized in that** the holding arm (26) and/or the detent arm (28) are provided on the bent edge (24) of the plate (22).

8. The assembly according to claim 6 or claim 7, **characterized in that** the bent edge (24) is provided with a recess for a plug connector (43) of the sensor.

9. The assembly according to any of claims 1 to 6, **characterized in that** the plate (22) is provided with an installation aid (50) by means of which the holding clip (16) can be connected with the sensor (10).

10. The assembly according to claim 9, **characterized in that** the installation aid is constructed in the manner of a lateral tongue (50).

11. The assembly according to claim 9 or claim 10, **characterized in that** the installation aid includes a guide slot (52) into which a guide projection (54) of the sensor (10) can engage.

12. The assembly according to any of the preceding claims, **characterized in that** two holding arms (26) are provided on one side of the plate, and two detent arms (28) are provided on the other side.

13. The assembly according to any of claims 1 to 11, **characterized in that** the two detent arms (28) are connected with the plate (22) by means of a shared connecting cross-piece (29).

14. The assembly according to any of the preceding claims, **characterized in that** the assembly includes a holding frame (12) which can be attached to a window pane of a motor vehicle.

## Revendications

1. Ensemble, comprenant un capteur de pluie (10) et une pince de retenue (16) pour le capteur de pluie (10), la pince de retenue présentant une plaque (22) qui peut recouvrir le capteur, ainsi qu'au moins un bras de retenue (26) et au moins un bras d'enclenchement (28) réalisés de manière à pouvoir s'engager sur un cadre de retenue (12) pour le capteur, la pince de retenue (16) étant réalisée d'un seul tenant, et le capteur de pluie (19) étant pré-monté sur la pince de retenue (16), **caractérisé en ce que** le capteur de pluie (10) présente une saillie de fixation (42) et un nez d'enclenchement (44) qui coopère avec un évidement (32) dans le bras d'enclenchement (28) de la pince de retenue (16) de manière à pouvoir retenir le bras d'enclenchement (28) dans un état pré-monté dans lequel le bras d'enclenchement (28) peut être inséré dans une butée (14) sur le cadre de retenue (12), et de manière à pouvoir arrêter le bras d'enclenchement (28) dans une position d'enclenchement après le montage du capteur (10) sur le cadre de retenue.

2. Ensemble selon la revendication 1, **caractérisé en ce que** la pince de retenue (16) est une pièce de tôle pliée.

3. Ensemble selon l'une des revendications précédentes, **caractérisé en ce qu'**il est prévu dans la plaque (22) au moins une languette ressort (38) qui est repliée hors du plan de la plaque en direction du capteur.

4. Ensemble selon la revendication 3, **caractérisé en ce que** la languette ressort (38) est définie par deux encoches (36) parallèles dans la plaque (22) de la pince de retenue (16).

5. Ensemble selon la revendication 3 ou la revendication 4, **caractérisé en ce qu'**il est prévu dans la languette ressort (38) un orifice (40) pour une saillie de fixation (42) du capteur (10).

6. Ensemble selon l'une des revendications précédentes, **caractérisé en ce que** la plaque (22) est pourvue d'un bord replié (24) servant à fixer le capteur.

7. Ensemble selon la revendication 6, **caractérisé en ce que** le bras de retenue (26) et le bras d'enclenchement (28), respectivement, sont prévus sur le bord replié (24) de la plaque (22).

8. Ensemble selon la revendication 6 ou la revendication 7, **caractérisé en ce que** le bord replié (24) est pourvu d'un évidement pour un connecteur enfichable (43) du capteur.

9. Ensemble selon l'une des revendications 1 à 6, **caractérisé en ce que** la plaque (22) est pourvue d'une aide au montage (50) au moyen de laquelle la pince de retenue (16) peut être reliée au capteur (10).

10. Ensemble selon la revendication 9, **caractérisé en ce que** l'aide au montage est réalisée à la manière d'une languette latérale (50).

11. Ensemble selon la revendication 9 ou la revendication 10, **caractérisé en ce que** l'aide au montage présente une coulisse de guidage (52) dans laquelle une saillie de guidage (54) du capteur (10) peut s'engager.

12. Ensemble selon l'une des revendications précédentes, **caractérisé en ce que** deux bras de retenue (26) sont prévus d'un côté de la plaque et deux bras d'enclenchement (28) de l'autre côté de la plaque.

13. Ensemble selon l'une des revendications 1 à 11, **caractérisé en ce que** les deux bras d'enclenchement (28) sont reliés à la plaque (22) au moyen d'une barrette de raccordement (29) commune.

14. Ensemble selon l'une des revendications précédentes, **caractérisé en ce que** l'ensemble présente un cadre de retenue (12) qui peut être agencé sur une vitre d'un véhicule automobile.
